# EUROPEAN PATENT APPLICATION

(11) **EP 4 636 887 A1**
(43) Date of publication of application: **22.10.2025**
(21) Application number: 23903376.4
(22) Date of filing: 06.12.2023
(51) Int. Cl.: H01M 10/0562, H01M 4/13, H01M 4/38, H01M 4/58, H01M 4/587, H01M 4/62, H01M 10/054, H01M 50/403, H01M 50/434

(54) **SOLID ELECTROLYTE FOR SECONDARY BATTERY, ELECTRODE FOR SECONDARY BATTERY, ALL-SOLID-STATE SECONDARY BATTERY, AND METHOD FOR MANUFACTURING ALL-SOLID-STATE SECONDARY BATTERY**

(30) Priority: 16.12.2022 JP 2022200769
(71) Applicant: Nippon Electric Glass Co., Ltd., Otsu-shi, Shiga 520-8639 (JP)
(72) Inventor: TSUNODA, Kei, Otsu-shi Shiga 520-8639 (JP); YAMAUCHI, Hideo, Otsu-shi Shiga 520-8639 (JP)
(74) Representative: Tetzner, Michael
(86) International application number: PCT/JP2023/043609
(87) International publication number: WO 2024/128087

(57) **Abstract**

Provided is a solid electrolyte having excellent adhesion to the electrode and densifiable without being fired at high temperatures and, thus, capable of delivering good battery characteristics. A solid electrolyte for a sodium-ion secondary battery contains an alkali metal oxide and silicon oxide and is amorphous.

## Description

### [Technical Field]

The present invention relates to solid electrolytes for use in power storage devices, such as all-solid-state sodium-ion secondary batteries, electrodes for secondary batteries, all-solid-state secondary batteries, and methods for manufacturing all-solid-state secondary batteries.

### [Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of burning or explosion. As a solution to this problem, all-solid-state lithium-ion batteries using a solid electrolyte instead of an organic electrolytic solution have been under development (see, for example, Patent Literature 1).

However, as for lithium, there is concern about global rise in raw and processed material costs. To cope with this, sodium has attracted attention as a material to replace lithium and beta-alumina-based solid electrolytes, including β-alumina and β"-alumina, are used as solid electrolytes.

Patent Literature 1 discloses an all-solid-state sodium-ion secondary battery in which a beta-alumina-based solid electrolyte, such as β-alumina or β"-alumina, is used as a solid electrolyte.

### [Citation List]

### [Patent Literature]

[PTL 1]
WO 2018/225494 A1

### [Summary of Invention]

### [Technical Problem]

In the case of use of a conventional beta-alumina-based solid electrolyte in an all-solid-state sodium secondary battery, when an electrode active material and a solid electrolyte are mixed and fired at high temperatures, the solid electrolyte has excellent adhesion to the electrode and the produced electrode is a dense electrode. However, during the firing, a reaction may occur between the electrode active material and the solid electrolyte and, thus, battery characteristics may deteriorate, which presents a problem of limited choice of materials for the electrode active material.

In view of the foregoing, the present invention has an object of providing a solid electrolyte having excellent adhesion to the electrode and densifiable without being fired at high temperatures and, thus, capable of delivering good battery characteristics.

### [Solution to Problem]

Aspects for solving the above problem will be described.

A solid electrolyte for a sodium-ion secondary battery of aspect 1 in the present invention contains an alkali metal oxide and silicon oxide and is amorphous.

A solid electrolyte for a sodium-ion secondary battery of aspect 2 in the present invention is the solid electrolyte for a sodium-ion secondary battery according to aspect 1, wherein the solid electrolyte preferably contains, in terms of % by mole, 5 to 70% Na₂O and 15 to 90% SiO₂.

A solid electrolyte for a sodium-ion secondary battery of aspect 3 in the present invention is the solid electrolyte for a sodium-ion secondary battery according to aspect 1 or 2, wherein the solid electrolyte is preferably used in an all-solid-state sodium-ion secondary battery.

An electrode for a sodium-ion secondary battery of aspect 4 in the present invention contains: the solid electrolyte for a sodium-ion secondary battery composed according to any one of aspects 1 to 3; and an electrode active material.

An electrode for a sodium-ion secondary battery of aspect 5 in the present invention is the electrode for a sodium-ion secondary battery according to aspect 4, wherein the electrode preferably further contains at least one type of sodium-ion conductive crystals selected from among β-alumina, β"-alumina, and NASICON crystals.

An electrode for a sodium-ion secondary battery of aspect 6 in the present invention is the electrode for a sodium-ion secondary battery according to aspect 4 or 5, wherein the solid electrolyte for a sodium-ion secondary battery is preferably contained inside the electrode for a sodium-ion secondary battery.

An electrode for a sodium-ion secondary battery of aspect 7 in the present invention is the electrode for a sodium-ion secondary battery according to aspect 4 or 5, wherein the solid electrolyte for a sodium-ion secondary battery is preferably formed on one of principal surfaces of the electrode for a sodium-ion secondary battery.

An electrode for a sodium-ion secondary battery of aspect 8 in the present invention is the electrode for a sodium-ion secondary battery according to any one of aspects 4 to 7, wherein the electrode active material may be a negative-electrode active material.

An electrode for a sodium-ion secondary battery of aspect 9 in the present invention is the electrode for a sodium-ion secondary battery according to aspect 8, wherein the negative-electrode active material preferably contains crystals of at least one metal selected from among Sn, Bi, Pb, P, and Sb, crystals of an alloy containing at least one selected from among Sn, Bi, Pb, P, and Sb, a glass containing at least one selected from among Sn, Bi, and Sb, hard carbon or soft carbon.

An electrode for a sodium-ion secondary battery of aspect 10 in the present invention is the electrode for a sodium-ion secondary battery according to any one of aspects 4 to 7, wherein the electrode active material may be a positive-electrode active material.

An electrode for a sodium-ion secondary battery of aspect 11 in the present invention is the electrode for a sodium-ion secondary battery according to aspect 10, wherein the positive-electrode active material preferably contains: (i) at least one transition metal element selected from the group consisting of Fe, Mn, Co, Ni, V, Ti, and Cr; (ii) an element of Na; and (iii) an element of O.

An electrode for a sodium-ion secondary battery of aspect 12 in the present invention is the electrode for a sodium-ion secondary battery according to aspect 10 or 11, wherein the positive-electrode active material preferably contains crystals represented by a general formula NaₓM_{y}P₂O_{z} (where 1 ≤ x ≤ 2.8, 0.95 ≤ y ≤ 1.6, 6.5 ≤ z ≤ 8, and M is at least one transition metal element selected from the group consisting of Fe, Mn, Co, Ni, V, Ti, and Cr).

An electrode for a sodium-ion secondary battery of aspect 13 in the present invention is the electrode for a sodium-ion secondary battery according to any one of aspects 10 to 12, wherein the positive-electrode active material preferably further contains an amorphous phase.

An electrode for a sodium-ion secondary battery of aspect 14 in the present invention is the electrode for a sodium-ion secondary battery according to any one of aspects 4 to 13, wherein the electrode preferably further contains a conductive agent.

An electrode for a sodium-ion secondary battery of aspect 15 in the present invention is the electrode for a sodium-ion secondary battery according to any one of aspects 4 to 14, wherein the electrode preferably contains, in terms of % by mass, 70% to 99% the electrode active material and 1% to 20% the solid electrolyte for a sodium-ion secondary battery.

A sodium-ion secondary battery of aspect 16 in the present invention includes the electrode for a sodium-ion secondary battery composed according to any one of aspects 4 to 15.

A sodium-ion secondary battery of aspect 17 in the present invention includes a solid electrolyte layer containing the solid electrolyte for a sodium-ion secondary battery composed according to any one of aspects 1 to 3.

A method for manufacturing a sodium-ion secondary battery of aspect 18 in the present invention includes: a composite material coating step of coating a principal surface of a separator layer containing β-alumina, β"-alumina or NASICON crystals with an electrode composite material containing an electrode active material and a water glass; and a heat treatment step of subjecting the electrode composite material after the coating to a heat treatment at not higher than 200°C.

### [Advantageous Effects of Invention]

The present invention enables provision of a solid electrolyte having excellent adhesion to the electrode and densifiable without being fired at high temperatures and, thus, capable of delivering good battery characteristics.

### [Brief Description of Drawings]

[Fig. 1]

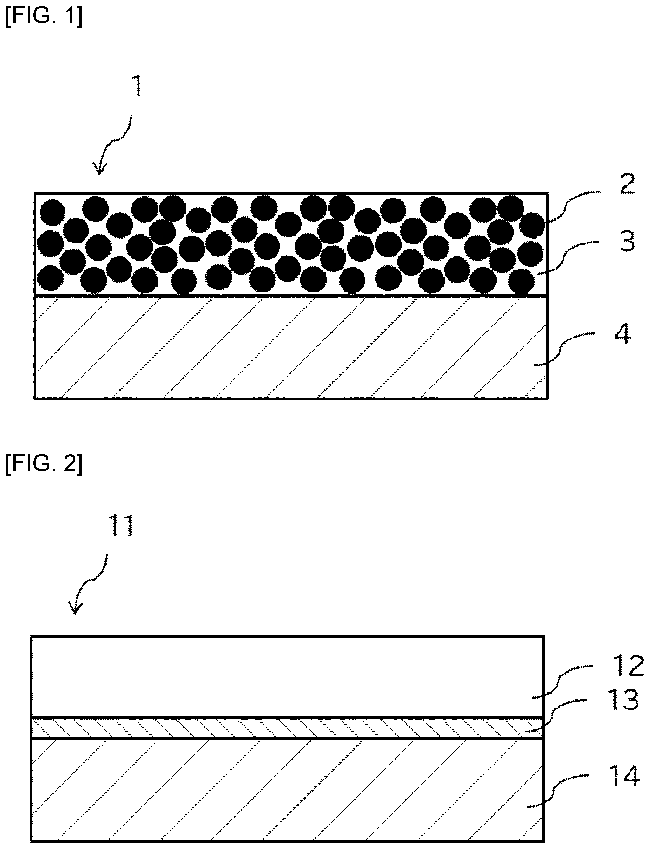

   Fig. 1 is a schematic cross-sectional view showing an embodiment of an electrode for a sodium-ion secondary battery according to the present invention.
[Fig. 2]
   Fig. 2 is a schematic cross-sectional view showing another embodiment of an electrode for a sodium-ion secondary battery according to the present invention.
[Fig. 3]

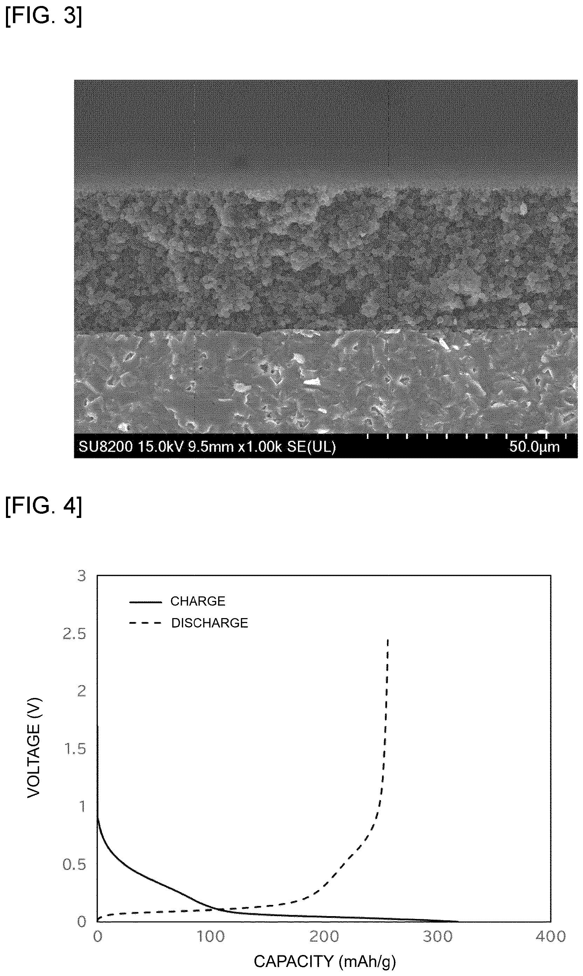

   Fig. 3 is a SEM cross-sectional image of an electrode formed on a separator layer in Example 1 of the electrode for a sodium-ion secondary battery according to the present invention.
[Fig. 4]
   Fig. 4 is a graph showing initial charge and discharge curves of a test battery produced in Example 1 of the electrode for a sodium-ion secondary battery according to the present invention.

### [Description of Embodiments]

A solid electrolyte for a sodium-ion secondary battery according to the present invention contains an alkali metal oxide and silicon oxide and is amorphous. An example of a specific composition thereof is one containing, in terms of % by mole, 5 to 70% Na₂O and 15 to 90% SiO₂. The reasons why the composition is limited as just described will be described below.

The alkali metal oxide is a component that gives ionic conductivity. Examples of the alkali metal oxide include Li₂O, Na₂O, and K₂O. Among them, Na₂O is preferred because it forms sodium ions moving during charge and discharge of a sodium-ion secondary battery. The content of Na₂O is preferably 5 to 70%, more preferably 10 to 60%, and particularly preferably 15 to 50%. If Na₂O is too little, the above effect is difficult to achieve. On the other hand, if Na₂O is too much, surplus sodium forms a compound not contributing to ionic conductivity and, therefore, the ionic conductivity of the solid electrolyte is likely to decrease.

Silicon oxide (SiO₂) is a network component that forms an ion conduction path constituted by a three-dimensional network of Si-O-Si bonds. In addition, silicon oxide is amorphous and, therefore, the above three-dimensional network is randomly formed as compared to crystals, which enables the formation of larger and more continuous ion conduction path and an improvement in ionic conductivity. Furthermore, when the alkali metal oxide is contained together with silicon oxide, non-bridging oxygen is formed, which enables a further increase in size of the ion conduction path and a further improvement in ionic conductivity. The content of SiO₂ is preferably 5 to 70%, more preferably 10 to 60%, and particularly preferably 15 to 50%. If SiO₂ is too little, the amorphous three-dimensional network is difficult to maintain, which makes it likely that the ionic conductivity decreases. On the other hand, if SiO₂ is too much, the non-bridging oxygen is reduced, which makes it likely that the ionic conductivity decreases.

The solid electrolyte for a sodium-ion secondary battery according to the present invention can be produced by subjecting an aqueous solution of lithium silicate, sodium silicate or potassium silicate to a heat treatment at not higher than 200°C to dehydrate the aqueous solution.

An electrode for a sodium-ion secondary battery according to the present invention contains the above-described solid electrolyte for a sodium-ion secondary battery and an electrode active material. The electrode includes a positive electrode and a negative electrode. The electrode active material contained in the negative electrode is a negative-electrode active material, while the electrode active material contained in the positive electrode is a positive-electrode active material.

The negative-electrode active material that can be used is not particularly limited so long as it can absorb sodium during charge and release sodium during discharge, but an example that can be used is a carbon electrode material, such as hard carbon or soft carbon. The carbon electrode material is preferably hard carbon. However, the negative-electrode active material may contain crystals of at least one sodium-absorbable and releasable metal selected from among Sn, Bi, Pb, P, and Sb, crystals of an alloy containing at least one selected from among Sn, Bi, Pb, P, and Sb, or a glass containing at least one selected from among Sn, Bi, and Sb. The negative electrode layer is preferably not a layer formed of a single phase of metallic sodium.

The positive-electrode active material that can be used is not particularly limited so long as it can release sodium during charge and absorb sodium during discharge, but examples that can be used include positive-electrode active materials that contain: (i) at least one transition metal element selected from the group consisting of Fe, Mn, Co, Ni, V, Ti, and Cr; (ii) an element of Na; and (iii) an element of O. Among them, the preferred positive-electrode active material is one containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one transition metal element selected from the group consisting of Fe, Mn, Co, Ni, V, Ti, and Cr). Furthermore, the positive-electrode active material preferably further contains an amorphous phase.

The percentages of the materials in the electrode may be, for example, in terms of % by mass, 70% to 99% for the electrode active material and 1% to 20% for the solid electrolyte for a sodium-ion secondary battery.

The electrode may further contain at least one type of sodium-ion conductive crystals selected from among β-alumina, β"-alumina, and NASICON crystals, and a conductive agent.

The at least one type of sodium-ion conductive crystals selected from among β-alumina, β"-alumina, and NASICON crystals can further increase the ionic conductivity of the electrode for a sodium-ion secondary battery. The preferred content of the sodium-ion conductive crystals is, in terms of % by mass, 0% to 15% and the more preferred content thereof is 1% to 12%.

The conductive agent is a component to be added to the electrode for the purpose of achieving a capacity increase and high-rate charge and discharge of the electrode. The conductive agent that can be used is, for example, a conductive carbon. Examples of the conductive carbon include acetylene black, carbon black, Ketjen black, vapor-grown carbon fiber carbon conductive agent (VGCF), and carbon nanotubes. Examples of the conductive agent also include metal powders, such as Ni powder, Cu powder, and Ag powder. The preferred content of the conductive agent is, in terms of % by mass, 0% to 5% and the more preferred content thereof is 1% to 3%.

Hereinafter, a description will be given of a method for forming an electrode 1 containing an electrode active material and the solid electrolyte for a sodium-ion secondary battery according to the present invention, like that shown in Fig. 1.

First, an electrode active material powder and an aqueous solution of lithium silicate, sodium silicate or potassium silicate are mixed to make a slurry. Next, a separator layer 4 containing sodium-ion conductive crystals, such as β-alumina, β"-alumina or NASICON crystals, is coated at a principal surface with the slurry. Instead of the separator layer 4, an unshown current collector (a current collector foil) made of metal, such as Al, may be coated at a principal surface with the slurry. The separator layer 4 is a layer that is provided between a positive electrode and a negative electrode and having high ionic conductivity, but low electronic conductivity. Next, the slurry is subjected to a heat treatment at a temperature not higher than 200°C to dehydrate the slurry, thus obtaining an electrode 1 formed on the separator layer 4 or the current collector. As shown in Fig. 1, the obtained electrode 1 has a structure in which an electrode active material 2 and a solid electrolyte 3 for a sodium-ion secondary battery are dispersed.

The atmosphere in which the above heat treatment is conducted is not particularly limited, but the heat treatment is preferably conducted in the air atmosphere, an inert atmosphere or a vacuum atmosphere. In the case where the electrode active material is likely to be oxidized and thus deteriorated, the heat treatment may be conducted in a reductive atmosphere containing H2. The temperature for the heat treatment is not higher than 200°C, preferably not higher than 180°C, and more preferably not higher than 160°C. The lower limit of the temperature for the heat treatment is not particularly limited, but preferably not lower than 0°C, more preferably not lower than 10°C, even more preferably not lower than 20°C, and particularly preferably not lower than 30°C.

Another embodiment as an example is, as shown in Fig. 2, an electrode 11 for a sodium-ion secondary battery in which the electrode is formed of an electrode core layer 12 and a solid electrolyte layer 13 and the solid electrolyte layer 13 containing a solid electrolyte for a sodium-ion secondary battery is formed on one principal surface (the outside principal surface) of the electrode core layer 12 containing an electrode active material. In this case, since the solid electrolyte layer 13 is provided between the electrode core layer 12 and a separator layer 14 like that described previously, the electrode core layer 12 can adhere tightly to the separator layer 14.

In a method for forming the electrode 11 in this embodiment, the electrode core layer 12 and the separator layer 14 are prepared and a surface of the electrode core layer 12 is coated with an aqueous solution of lithium silicate, sodium silicate or potassium silicate. After the coating, the coated surface and a principal surface of the separator layer are bonded together. After the bonding, both the layers are subjected to a heat treatment at a temperature not higher than 200°C to dehydrate the aqueous solution, thus obtaining an electrode-separator layer composite shown in Fig. 2.

The method for forming the electrode core layer 12 is not particularly limited. For example, the electrode core layer 12 may be formed by coating an unshown current collector foil with an electrode active material-containing slurry containing a binder and then drying the slurry. Alternatively, the electrode core layer 12 may be formed by pressure molding of the electrode active material powder. If the strength cannot sufficiently be obtained, the pressure-molded electrode active material may be subjected to a heat treatment at a sintering temperature of the active material to form an electrode core layer 12. As another method for forming the electrode core layer 12, an electrode active material precursor powder containing a glass may be heated at a temperature not lower than the crystallization temperature to precipitate electrode active material crystals from the glass, thus forming a crystallized glass. When only the electrode core layer 12 is fired as just described, a battery member having good battery characteristics can be made without reacting with the separator layer 14.

A current collector layer may be provided on one principal surface of the electrode. The material for the current collector layer is not particularly limited, but a metallic material, such as aluminum, titanium, silver, copper, stainless steel or an alloy of any of them, can be used for the current collector layer. The above metallic materials may be used singly or in combination of some or all of them. The alloy of any of them refers to an alloy containing at least one of the above metals. The thickness of the current collector layer is not particularly limited, but may be in a range of 0.1 µm to 1000 µm.

The method for forming the current collector layer is not particularly limited, but examples include a physical vapor deposition method, such as evaporation or sputtering, and a chemical vapor deposition method, such as thermal CVD, MOCVD or plasma CVD. An example of the other method for forming the current collector layer is a liquid-phase deposition method, such as plating, the sol-gel method or spin coating. However, the current collector layer is preferably formed on the principal surface of the electrode by sputtering because sputtering provides excellent adhesion.

### [Examples]

Hereinafter, the present invention will be described in detail with reference to examples, but the present invention is not at all limited to the following examples.

### (Example 1)

A negative-electrode active material made of hard carbon (BELLFINE manufactured by AT Electrode, average particle diameter D50 = 1 µm) was used as an electrode active material. The electrode active material and an aqueous solution of sodium silicate (manufactured by Kanto Chemical Co., Inc., 36.6% (as SiO₂) (G)/17.5% (as Na₂O)) were measured out in a mass ratio of 91:9. With hard carbon powder as a solid content in the mixture liquid, ion exchange water was added dropwise to the mixture liquid to give a solid content concentration of 60% and they were mixed with a planetary centrifugal mixer (Awatori Rentaro manufactured by THINKY CORPORATION), thus obtaining a slurry.

A 0.1 mm thick separator layer made of β"-alumina solid electrolyte was coated with the slurry to give a thickness of 30 µm after being dried. After the coating, the slurry was vacuum dried at 150°C for two hours to harden sodium silicate, thus forming an electrode (negative electrode) on the separator layer.

An evaporated aluminum film with a thickness of 500 nm was formed as a current collector on the surface of the electrode. Thereafter, in an argon glove box, metallic sodium was attached, as a counter electrode opposed to the above electrode, to the separator layer and they were encapsulated in a CR2032 coin cell, thus producing an all-solid-state battery.

The produced all-solid-state battery was subjected to a constant-current charge and discharge test at a current value with a C-rate of 0.02C (charge/discharge for 50 hours) in a thermostat bath at 60°C. The battery was charged and discharged at a cutoff voltage of 2.5 to 0.001 V and its charge/discharge efficiency was determined from the charge capacity and the discharge capacity. The results are shown in Table 1.

### (Example 2)

An all-solid-state battery was produced in the same manner as in Example 1 except that a negative-electrode active material made of hard carbon (average particle diameter D50 = 10 µm) was used as an electrode active material and the electrode active material and an aqueous solution of sodium silicate were measured out in a mass ratio of 95:5, and the all-solid-state battery was evaluated in terms of battery characteristics. The results are shown in Table 1.

### (Example 3)

An all-solid-state battery was produced in the same manner as in Example 1 except that a negative-electrode active material made of hard carbon (average particle diameter D50 = 10 µm) was used as an electrode active material and the electrode active material and an aqueous solution of sodium silicate were measured out in a mass ratio of 97:3, and the all-solid-state battery was evaluated in terms of battery characteristics. The results are shown in Table 1.

### (Example 4)

An all-solid-state battery was produced in the same manner as in Example 1 except that a negative-electrode active material made of metallic tin (manufactured by EM Japan Co. Ltd., average particle diameter D50 = 0.5 µm) was used as an electrode active material and the electrode active material and an aqueous solution of sodium silicate were measured out in a mass ratio of 87:13, and the all-solid-state battery was evaluated in terms of battery characteristics. The results are shown in Table 1.

### (Example 5)

An all-solid-state battery was produced in the same manner as in Example 1 except that the electrode active material and an aqueous solution of sodium silicate were measured out in a mass ratio of 70:30, and the all-solid-state battery was evaluated in terms of battery characteristics. The results are shown in Table 1.

### (Example 6)

An all-solid-state battery was produced in the same manner as in Example 1 except that a positive-electrode active material made of Na₃Fe₂(PO₄)P₂O₇ (average particle diameter D50 = 2 µm) was used as an electrode active material and the electrode active material, an aqueous solution of sodium silicate, and carbon nanotubes were measured out in a mass ratio of 94:5:1. The all-solid-state battery was evaluated in terms of battery characteristics in the same manner as in Example 1 except that the battery was charged and discharged at a cutoff voltage of 4.5 to 1.5 V. The results are shown in Table 2.

### (Example 7)

An all-solid-state battery was produced in the same manner as in Example 1 except that a positive-electrode active material made of Na₂FeP₂O₇ (average particle diameter D50 = 0.7 µm) was used as an electrode active material and the electrode active material, an aqueous solution of sodium silicate, and carbon nanotubes were measured out in a mass ratio of 94:5:1. The all-solid-state battery was evaluated in terms of battery characteristics in the same manner as in Example 1 except that the battery was charged and discharged at a cutoff voltage of 4.5 to 1.5 V. The results are shown in Table 2.

### (Example 8)

An all-solid-state battery was produced in the same manner as in Example 1 except that a positive-electrode active material made of Na₄Mn₃(PO₄)₂P₂O₇ (average particle diameter D50 = 0.6 µm) was used as an electrode active material and the electrode active material, an aqueous solution of sodium silicate, and carbon nanotubes were measured out in a mass ratio of 94:5:1. The all-solid-state battery was evaluated in terms of battery characteristics in the same manner as in Example 1 except that the battery was charged and discharged at a cutoff voltage of 4.5 to 1.5 V. The results are shown in Table 2.

### (Comparative Example 1)

An all-solid-state battery was produced in the same manner as in Example 1 except that sodium silicate was not incorporated thereinto, and the all-solid-state battery was evaluated in terms of battery characteristics. The results are shown in Table 2.

### (Comparative Example 2)

An all-solid-state battery was produced in the same manner as in Example 1 except that a negative-electrode active material made of hard carbon (BELLFINE manufactured by AT Electrode, average particle diameter D50 = 1 µm) was used as an electrode active material, a solid electrolyte of Na₃Zr₂Si₂PO₁₂ (average particle diameter D50 = 2 µm) was used instead of sodium silicate, and the electrode active material and the solid electrolyte were measured out in a mass ratio of 80:20, and the all-solid-state battery was evaluated in terms of battery characteristics. The results are shown in Table 2.

Fig. 3 shows a SEM cross-sectional image of the electrode formed on the separator layer in Example 1. Fig. 4 shows a graph of initial charge and discharge curves of the test battery produced in Example 1. Furthermore, Tables 1 and 2 show the results of charge capacities, discharge capacities, and initial charge/discharge efficiencies of the test batteries produced in Examples 1 to 8 and Comparative Examples 1 and 2.

**[Table 1]**

| | | Ex. 1 | Ex. 2 | Ex. 3 | Ex. 4 | Ex. 5 |
|---|---|---|---|---|---|---|
| Electrode Active Material | | hard carbon (D50 = 1*µ*m) | hard carbon (D50 = 10 *µ*m) | hard carbon (D50 = 10 *µ*m) | metallic tin (D50 = 0.5 *µ*m) | hard carbon (D50 = 1 *µ*m) |
| Solid Electrolyte | | sodium silicate | sodium silicate | sodium silicate | sodium silicate | sodium silicate |
| Conductive Agent | | - | - | - | - | - |
| Content (wt%) | Electrode Active Material | 91 | 95 | 97 | 87 | 70 |
| | Solid Electrolyte | 9 | 5 | 3 | 13 | 30 |
| | Conductive Agent | - | - | - | - | - |
| Battery Character istics | Charge Capacity (mAh/g) | 318 | 320 | 287 | 615 | 183 |
| | Discharge Capacity (mAh/g) | 256 | 268 | 223 | 390 | 130 |
| | Initial Charge/Discharge Efficiency (%) | 80.5 | 83.8 | 77.7 | 63.4 | 71.0 |

**[Table 2]**

| | | Ex. 6 | Ex. 7 | Ex. 8 | Comp. Ex. 1 | Comp. Ex. 2 |
|---|---|---|---|---|---|---|
| Electrode Active Material | | Na₃Fe₂(PO₄)P₂O₇ (D50 = 2 *µ*m) | Na₂FeP₂O₇ (D50 = 0.7 *µ*m) | Na₄Mn₃(PO₄)₂P₂O₇ (D50 = 0.6 *µ*m) | hard carbon (D50 = 1 *µ*m) | hard carbon (D50 = 1 *µ*m) |
| Solid Electrolyte | | sodium silicate | sodium silicate | sodium silicate | - | Na₃Zr₂Si₂PO₁₂ |
| Conductive Agent | | carbon nanotubes | carbon nanotubes | carbon nanotubes | - | - |
| Content (wt%) | Electrode Active Material | 94 | 94 | 94 | 100 | 80 |
| | Solid Electrolyte | 5 | 5 | 5 | - | 20 |
| | Conductive Agent | 1 | 1 | 1 | - | - |
| Battery Character istics | Charge Capacity (mAh/g) | 107 | 87 | 105 | 1.2 | 1.3 |
| | Discharge Capacity (mAh/g) | 86 | 79 | 83 | 0.2 | 0.3 |
| | Initial Charge/Discharge Efficiency (%) | 80.4 | 90.8 | 79.0 | 16.7 | 23.1 |

As shown in Fig. 3, a dense electrode was formed on a separator layer to adhere tightly to the separator layer. As shown in Tables 1 and 2, the charge capacity in Examples 1 to 8 was 87 mAh/g or more, but the charge capacity in Comparative Examples 1 and 2 was 1.3 mAh/g or less inferior to that in Examples 1 to 8. The discharge capacity in Examples 1 to 8 was 79 mAh/g or more, but the discharge capacity in Comparative Examples 1 and 2 was 0.3 mAh/g or less inferior to that in Examples 1 to 8. The initial charge/discharge efficiency in Examples 1 to 8 was 63.4% or more, but the initial charge/discharge efficiency in Comparative Examples 1 and 2 was 23.1% or less inferior to that in Examples 1 to 8.

### [Industrial Applicability]

The solid electrolyte according to the present invention is suitable for sodium-ion secondary batteries for use in portable electronic devices, electric vehicles, electric power tools, backup emergency power supplies, and so on.

## Claims

1. A solid electrolyte for a sodium-ion secondary battery, the solid electrolyte containing an alkali metal oxide and silicon oxide and being amorphous.

2. The solid electrolyte for a sodium-ion secondary battery according to claim 1, the solid electrolyte containing, in terms of % by mole, 5 to 70% Na₂O and 15 to 90% SiO₂.

3. The solid electrolyte for a sodium-ion secondary battery according to claim 1 or 2, the solid electrolyte being used in an all-solid-state sodium-ion secondary battery.

4. An electrode for a sodium-ion secondary battery, the electrode containing: the solid electrolyte for a sodium-ion secondary battery according to claim 1 or 2; and an electrode active material.

5. The electrode for a sodium-ion secondary battery according to claim 4, the electrode further containing at least one type of sodium-ion conductive crystals selected from among β-alumina, β"-alumina, and NASICON crystals.

6. The electrode for a sodium-ion secondary battery according to claim 4, wherein the solid electrolyte for a sodium-ion secondary battery is contained inside the electrode for a sodium-ion secondary battery.

7. The electrode for a sodium-ion secondary battery according to claim 4, wherein the solid electrolyte for a sodium-ion secondary battery is formed on one of principal surfaces of the electrode for a sodium-ion secondary battery.

8. The electrode for a sodium-ion secondary battery according to claim 4, wherein the electrode active material is a negative-electrode active material.

9. The electrode for a sodium-ion secondary battery according to claim 8, wherein the negative-electrode active material contains crystals of at least one metal selected from among Sn, Bi, Pb, P, and Sb, crystals of an alloy containing at least one selected from among Sn, Bi, Pb, P, and Sb, a glass containing at least one selected from among Sn, Bi, and Sb, hard carbon or soft carbon.

10. The electrode for a sodium-ion secondary battery according to claim 4, wherein the electrode active material is a positive-electrode active material.

11. The electrode for a sodium-ion secondary battery according to claim 10, wherein the positive-electrode active material contains: (i) at least one transition metal element selected from the group consisting of Fe, Mn, Co, Ni, V, Ti, and Cr; (ii) an element of Na; and (iii) an element of O.

12. The electrode for a sodium-ion secondary battery according to claim 10, wherein the positive-electrode active material contains crystals represented by a general formula NaₓM_{y}P₂O_{z} (where 1 ≤ x ≤ 2.8, 0.95 ≤ y ≤ 1.6, 6.5 ≤ z ≤ 8, and M is at least one transition metal element selected from the group consisting of Fe, Mn, Co, Ni, V, Ti, and Cr).

13. The electrode for a sodium-ion secondary battery according to claim 12, wherein the positive-electrode active material further contains an amorphous phase.

14. The electrode for a sodium-ion secondary battery according to claim 4, the electrode further containing a conductive agent.

15. The electrode for a sodium-ion secondary battery according to claim 4, the electrode containing, in terms of % by mass, 70% to 99% the electrode active material and 1% to 20% the solid electrolyte for a sodium-ion secondary battery.

16. An all-solid-state sodium-ion secondary battery comprising the electrode for a sodium-ion secondary battery according to claim 4.

17. An all-solid-state sodium-ion secondary battery comprising a solid electrolyte layer containing the solid electrolyte for a sodium-ion secondary battery according to claim 1 or 2.

18. A method for manufacturing an all-solid-state sodium-ion secondary battery, the method comprising:
a composite material coating step of coating a principal surface of a separator layer containing β-alumina, β"-alumina or NASICON crystals with an electrode composite material containing an electrode active material and a water glass; and
a heat treatment step of subjecting the electrode composite material after the coating to a heat treatment at not higher than 200°C.
